# EUROPÄISCHE PATENTSCHRIFT

(11) **EP 2 986 514 B1**
(45) Veröffentlichungstag und Bekanntmachung des Hinweises auf die Patenterteilung: **05.10.2016**
(21) Anmeldenummer: 14811864.9
(22) Anmeldetag: 11.12.2014
(51) Int. Cl.: B65B 29/02, B65B 7/28, B65D 85/804

(54) **PORTIONENKAPSEL ZUM ZUBEREITEN EINES BRÜHERZEUGNISSES**
PORTION CAPSULE FOR PREPARING A BREWED PRODUCT
CAPSULE PORTION POUR LA PRÉPARATION D'UN PRODUIT ÉBOUILLANTÉ

(30) Priorität: 24.12.2013 EP 13199514
(43) Veröffentlichungstag der Anmeldung: 24.02.2016
(73) Patentinhaber: Qbo Coffee GmbH, 8304 Wallisellen (CH)
(72) Erfinder: DEUBER, Louis, CH-8805 Richterswil (CH)
(74) Vertreter: Frei Patent Attorneys
(86) Internationale Anmeldenummer: PCT/EP2014/077344
(87) Internationale Veröffentlichungsnummer: WO 2015/096989

(56) Entgegenhaltungen:
- EP-A1- 2 465 793
- EP-A1- 2 647 317
- WO-A1-2010/118543
- US-A1- 2009 007 793

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine Kapsel mit einem Extraktionsgut sowie ein Verfahren zum Herstellen einer solchen Kapsel.

Extraktionsgeräte zum Zubereiten von Getränken aus einem in einer Portionsverpackung vorhandenen Extraktionsgut sind beispielsweise als Kaffee-, Espresso- oder auch Teemaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein erheblicher Druck von beispielsweise 5-20 bar - für Filterkaffee oder Tee auch weniger - herrschen.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz.

Aus der WO 2010/118543 ist eine Kaffee-Portionenkapsel bekannt, welche näherungsweise eine Würfelform aufweist und im Unterschied zu den bekannten becherförmigen Kapseln keinen auf der Ebene der einen (oberseitigen) Deckfläche umlaufenden Kragen aufweist. Ein solcher umlaufender Kragen wird bei Kapselsystemen gemäss dem Stand der Technik benötigt, erstens um die Kapsel beim Einwurf in das Extraktionsgerät zu führen und nach dem Einwurf in einer Zwischenposition zu halten. Zweitens ist der Kragen auf der Ebene der oberseitigen Deckfläche nötig, damit die Kapsel durch Einklemmen des Kragens zwischen entsprechende Dichtungselemente des Extraktionsgeräts beim Einleiten der Brühflüssigkeit abgedichtet werden kann, so dass die unter Druck stehende Brühflüssigkeit nicht an der Kapsel vorbei fliessen kann. Drittens wird ein solcher Kragen zum Verschliessen der Kapsel durch Ultraschallschweissen oder thermisches Versiegeln durch einen flachen Deckel (der auch als Folie ausgebildet sein kann) benötigt. Beim Verschliessen mittels Ultraschallschweissen braucht es den Kragen, um einen Energierichtungsgeber unterzubringen. Wird die Kapsel durch thermisches Versiegeln verschlossen, ist der Kragen nötig, damit der Deckel auf einer genügend grossen Fläche aufliegt. Im Gegensatz dazu wird gemäss WO 2010/118543 ein gewölbter Deckel verwendet, und das Verschliessen erfolgt bspw. mittels Ultraschall-Trennschweissen. Die gemäss der Lehre der WO 2010/118543 hergestellte Kapsel hat demnach unabhängig von ihrer ("Würfel"-)Form eine zwischen den durch die Deckfläche definierten Ebenen umlaufende, einen nur minimalen Kragen bildende Schweissbraue, deren Ausdehnung/seitliches Vorstehen jedoch im Vergleich zum Kragen bekannter Kapseln deutlich reduziert ist.

Die Kapsel gemäss WO 2010/118543 weist wichtige Vorteile auf, die in dieser Schrift auch beschrieben sind. Es ist jedoch eine Herausforderung, unter Berücksichtigung von Beschränkungen in der Dimensionierung der umlaufenden Schweissbraue den Deckel sicher am Grundkörper zu befestigen.

Der vorliegenden Erfindung stellt sich demnach die Aufgabe, Kapseln der in WO 2010/118543 beschriebenen Art weiterzuentwickeln, um ein verlässliches und besonders druckresistentes Verschliessen der Kapsel zu ermöglichen.

Gemäss einem Aspekt der Erfindung wird eine Kapsel mit einem Extraktionsgut zur Verfügung gestellt, welche Kapsel aufweist:
- Einen Grundkörper mit einem Bodenbereich und einer umlaufenden Seitenwand; und
- einen am Grundkörper befestigten Deckel;
- wobei der Deckel entlang eines umlaufenden Kragens am Grundkörper befestigt ist, wobei der Kragen zu einer Deckelseite hin an die umlaufende Seitenwand anschliesst;
- wobei der Grundkörper im Bereich des Kragens einen im Wesentlichen rechteckigen Querschnitt hat;
- wobei der Deckel eine Wölbung nach aussen bildet, so dass der Deckel zu einem Kapselvolumen beiträgt;
- wobei sich eine umlaufende, zur Deckelseite hin gewandte Fläche bildet, die sich von einer Aussenkante des Kragens bis zu einem Ansatz der Wölbung erstreckt;
- und wobei der Ansatz der Wölbung im Vergleich zum Übergang zwischen der Seitenwand und dem Kragen nach innen versetzt ist.

Der Grundkörper bildet mit Bodenbereich und umlaufender Seitenwand eine Art Becher, der durch den Deckel verschlossen wird. Dabei kann der Bodenbereich flach sein; das ist jedoch keine Notwendigkeit. Bei der Kapselherstellung wird das Extraktionsgut zunächst in den Becher eingefüllt. In diesem Zustand können der Kragen des Grundkörpers und/oder auch das entsprechende Gegenstück des Deckels ein Übermass aufweisen, wobei später im Verfahren diese Bereiche abgetrennt werden.

Wie an sich bekannt kann das Extraktionsgut beim Füllen in den Grundkörper durch entsprechende Pressung leicht komprimiert werden. Beim Verschliessen der Kapsel durch den Deckel wird der Grundkörper dann so gehalten, dass seine Achse vertikal ist, worauf der Deckel oben aufgesetzt und dann befestigt wird. Dabei kann insbesondere der Kragen von unten her durch ein stützendes Werkzeug gehalten werden.

Der Versatz beträgt - gemessen zwischen den Orten grösster Krümmung im Übergang zwischen der vom Kragen gebildeten deckel- bzw. grundkörperseitigen Fläche und der Wölbung bzw. der Grundkörper-Aussenfläche - mindestens 0.15 mm oder 0.2 mm, bspw. mindestens 0.3 mm.

Durch den diskutierten Versatz dehnt sich die zur Deckelseite hin gewandte Fläche im Vergleich zur Bemessung des Kragens weiter nach innen aus. Es hat sich überraschend gezeigt, dass dies fertigungstechnische Vorteile mit sich bringt. Ein Werkzeug, das während eines Ultraschallschweissvorgangs - eines Ultraschall-Trennschweissvorgangs oder eines nicht mit einem Abtrennvorgang kombinierten Ultraschallschweissvorgangs -während eines thermischen Verbindungsprozesses oder allenfalls auch während eines anderen Verbindungsprozesses (bspw. durch kleben) von oben, d.h. von der Deckelseite her ansetzt, kann nämlich entlang einer grösseren Fläche angreifen, ohne dass dadurch der Kragen weiter ausgedehnt sein müsste. Überraschend ist, dass dies vorteilhaft ist, obwohl im Unterschied zum gesamten Stand der Technik aufgrund des Versatzes das Werkzeug auch dort angreift, wo kein Gegenpart in Form eines den Kragen stützenden weiteren Werkzeugs vorhanden ist, und bspw. sogar radial-innerhalb des Bechervolumens.

Dass das funktionieren kann und nicht einfach zu einem wirkungslosen Drücken des Deckels nach innen während der Fertigung führt, kann unter anderem auf die selbstversteifende Wirkung der Deckel-Wölbung zurückgeführt werden. Auch die rechteckige Grundform mit den sich dadurch bildenden versteifenden Ecken kann dazu beitragen. Schliesslich kann optional der Grundkörper im Bereich der an den Kragen anschliessenden Partie mit einer Verdickung nach innen versehen sein, die ebenfalls dazu beiträgt dass dem Druck des Werkzeugs auch dort ein Gegendruck entgegensteht, wo das Werkzeug nicht unmittelbar einen Gegenpart in Form des unter dem Kragen ansetzenden Gegenwerkzeugs hat.

In der Realität ist die Positioniergenauigkeit des Deckels auf dem Grundkörper bei der Fertigung nicht perfekt. Dadurch ergeben sich Schwankungen in dem beanspruchten Versatz. Die Position des Deckels wird in x und y Richtung schwanken, allenfalls um bis zu 0.2 mm. Ausserdem kann der Deckels in Bezug auf den Grundkörper leicht verdreht sein, zwar nur in einem Bereich von bis zu 2° oder gar bis zu 3°. Die in diesem Text beschriebenen und beanspruchten Werte beziehen sich aus diesen Gründen immer auf einen Mittelwert.

Die Form der Kapsel ist so, dass der Grundkörper im Bereich des Kragens im Querschnitt im Wesentlichen rechteckig, bspw. im Wesentlichen quadratisch ist. Auch der Kragen selbst - bspw. dessen Aussenkante - kann im Wesentlichen rechteckig, insbesondere quadratisch sein. ,Im Wesentlichen rechteckig' bzw. ,im Wesentlichen quadratisch' schliesst insbesondere abgerundete Ecken nicht aus.

Die Kapsel kann als Ganze - bis auf den diskutierten Versatz und den Kragen - die Form eines Würfels oder Quaders, insbesondere eines Würfels haben. In Ausführungsformen kann der Kragen seitlich maximal 2 mm, insbesondere maximal 1.5 mm hervorstehen. Die Würfelform schliesst eine - bspw. bei tiefgezogenen Kapseln herstellungsbedingte - Neigung der umlaufenden Seitenflächen zur Achse (Senkrechten auf die Boden- und/oder Deckelfläche) von bspw. maximal 3°, insbesondere maximal 2° oder maximal 1.5° nicht aus.

Die Form des Deckels kann von aussen nach innen einen Kragenbereich, der die zur Deckelseite hin gewandte Fläche bildet, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Kragenebene nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Bodenfläche ist. Es kann insbesondere vorgesehen sein, dass dieser flache Bereich mehr als 60% des Durchmessers und entsprechend mindestens 40% der Fläche, einnimmt.

Sowohl der Grundkörper als auch der Deckel sind bspw. aus Kunststoff gefertigt. Es kann insbesondere vorgesehen sein, dass Grundkörper und Deckel aus demselben Kunststoff bestehen. Als Beispiel für ein Material sei Polypropylen genannt, wobei eine Sperrschicht eingearbeitet sein kann, die eine Barriereneigenschaft für Sauerstoff hat und eine Diffusion von Sauerstoff in die Kapsel verhindert. Eine solche Sperrschicht weist bspw. ein Ethylen-Vinylalkohol-Copolymer (EVOH) auf. Die Wandstärke im Bereich des Grundkörpers beträgt insbesondere 0.1 mm und 0.5 mm, vorzugsweise zwischen 0.2 mm und 0.4 mm, bspw. zwischen 0.25 mm und 0.35 mm. Dasselbe kann auch für die Wandstärke des Deckels gelten. In einer Ausführungsform entspricht die Wandstärke des Deckels ungefähr der Wandstärke des Grundkörpers.

Anstelle von Polypropylen kommen auch andere Kunststoffe in Frage. Auch die Anwendung der Erfindung auf Nicht-Kunststoffe ist nicht ausgeschlossen.

Der Grundkörper kann im Tiefziehverfahren hergestellt sein. Alternativ kommt auch die Herstellung durch Spritzgiessen in Frage. Dasselbe gilt für den Deckel, wobei aufgrund dessen beschränkter Tiefe das Tiefziehverfahren auch als Prägeverfahren aufgefasst werden kann. Kombinationen mit spritzgegossenem Grundkörper und tiefgezogenem Deckel und umgekehrt sind möglich.

Bei einer Ausführung im Wesentlichen in Würfelform beträgt die äussere Länge der Würfelkanten beispielsweise zwischen 24 und 30 mm für eine Füllmenge von zwischen ca. 6 g und ca. 10 g Kaffee. Für grössere Füllmengen sind auch grössere Abmessungen, bspw. von bis zu 35 mm, nicht ausgeschlossen.

Ein Verfahren zum Herstellen einer Kapsel der beschriebenen Art kann die folgenden Schritte aufweisen:
- zur-Verfügung-stellen des Grundkörpers;
- füllen des Grundkörpers mit dem Extraktionsgut;
- auflegen des Deckels auf den Grundkörper, so dass Grundkörper und Deckel gemeinsam den umlaufenden Kragen bilden;
- Befestigen des Deckels am Grundkörper entlang des umlaufenden Kragens unter Energieeintrag.

Die Befestigung des Deckels am Grundkörper kann gemäss einer ersten Ausführung durch Ultraschallschweissen geschehen. Gemäss einer ersten Möglichkeit wird das Ultraschalltrennschweissverfahren verwendet, bei welchem durch die Wirkung des Ultraschalls auch ein eventueller überstehender Rand des Deckels und des Grundkörpers abgetrennt wird. Gemäss einer zweiten Möglichkeit erfolgt ein solches Abtrennen in einem separaten Bearbeitungsschritt, bspw. durch Stanzen.

In einer Ausführungsform - das ist eine Option für beide Möglichkeiten - ist ein Energierichtungsgeber für das Ultraschallschweissverfahren am Deckel und nicht am Grundkörper vorhanden. Dies erweist sich als besonders vorteilhaft für die Verbindung zwischen Grundkörper und Deckel.

In einer zweiten Ausführung erfolgt das Befestigen des Deckels am Grundkörper mittels Wärmeübertrag von einem geheizten Werkzeug. In einer dritten Ausführung erfolgt das Befestigen mittels Laserschweissen. In einer vierten Ausführung geschieht das durch Kleben.

Auch Kombinationen, bspw. mit Anschmelzen eines Klebers durch Ultraschall und/oder Wärme (also eigentlich ein Lötverfahren) oder mit der Verwendung einer geheizten Sonotrode in einem kombiniert thermisch/Ultraschallverfahren etc. sind möglich.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine Kapsel in Seitenansicht;
- Fig. 2 die Kapsel gemäss Fig. 1 in einer alternativen Ansicht;
- Fig. 3 eine Schnittdarstellung der Kapsel im Bereich des Kragens;
- Fig. 4 die Schnittdarstellung gemäss Fig. 3 mit schematisch dargestellten Werkzeugen;
- Fig. 5 eine Ansicht eines geschnitten dargestellten Deckels; und
- Fig. 6 eine Ansicht eines ebenfalls geschnitten dargestellten alternativen Deckels.

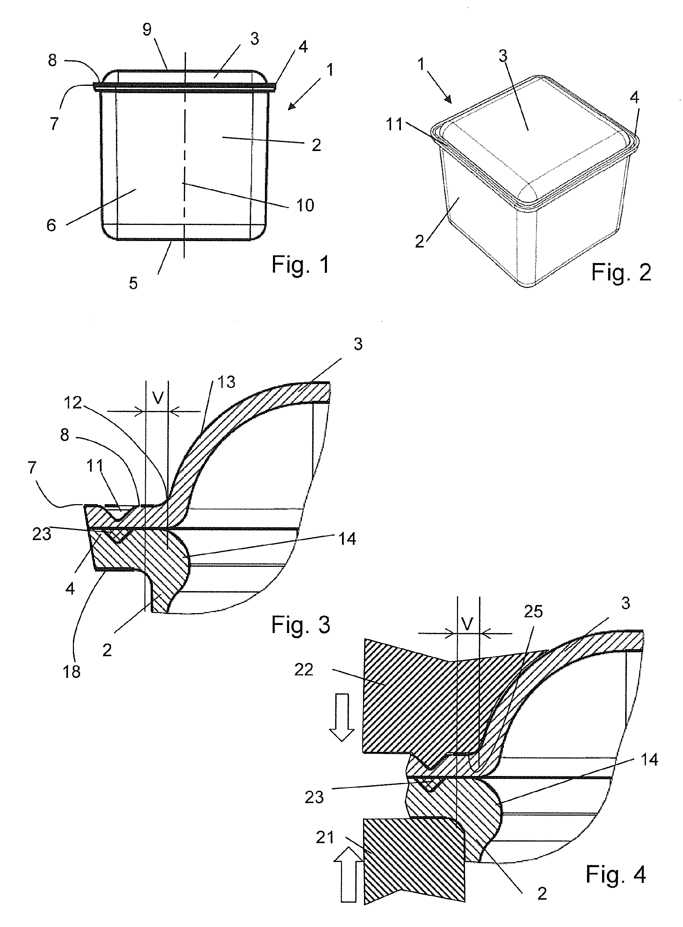

Die mit einem Extraktionsgut - insbesondere gemahlenem Kaffee - gefüllte Kapsel 1 gemäss Figuren 1 und 2 hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat. Der Neigungswinkel der in der Figur seitlichen Flächen gegenüber der Senkrechten zur Grundfläche 5 - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel weist einen Grundkörper (oder Becher) 2 und einen entlang eines umlaufenden Kragens 4 daran befestigten Deckel 3 auf. Der Grundkörper bildet einen Kapselboden 5 und eine umlaufende Seitenwand 6, welche an ihrem in Bezug auf axiale Richtungen (Achse 10) äusseren, in der Figur oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen versetzt ist.

Der umlaufende Kragen bildet eine zu Deckelseite hin gewandte Fläche 8, die sich von der Aussekante 7 des Kragens bis zum Ansatz 12 der Wölbung erstreckt. Figur 3 zeigt einen vergrösserten Ausschnitt der Kapsel in einer Schnittdarstellung. Wie man in dieser Figur besonders gut sieht, ist der Ansatz 12 gegenüber dem Übergang zwischen dem Kragen 4 und der vom Grundkörper 2 gebildeten umlaufenden Seitenwand nach innen versetzt. Der Versatz v ist dabei im Vergleich zur Dicke der Kapselwand relevant; er beträgt insbesondere mindestens 0.2 mm. Der Versatz v wird wie in Fig. 3 illustriert gemessen zwischen den zur Aussenfläche des Grundkörpers im Bereich des Kragens 4 parallelen Ebenen, die durch den Ort maximaler konkaver Krümmung im Übergang zwischen der deckelseitigen Fläche 8 bzw. der grundkörperseitigen Oberfläche 18 des Kragens 4 und der Wölbung des Deckels bzw. der Aussenfläche des Grundkörpers gehen.

Wie man in insbesondere in Figuren 1 und 3 sieht, bildet der Deckel 8 zwischen dem Kragenbereich und der eigentlichen Deckfläche 9 einen Übergangsbereich 13, in welchem die Wand eine Krümmung aufweist und so die Wölbung bildet. Im gezeichneten Beispiel geht dieser ausgehend von einer Partie, die einem fast rechten Winkel zur Kragenebene und der Deckfläche 9 steht, in stetiger konvexer Krümmung in den flachen, die Deckfläche bildenden Bereich über. Am Ansatz 12 ist daher die konkave Krümmung gross (d.h. der Krümmungsradius) klein. Es wäre aber auch denkbar, die konkave und die konvexe Krümmung einander mehr anzugleichen, wodurch dann ein im Querschnitt S-förmiger Verlauf resultieren würde. Durch die flächenmässige Beschränkung des Übergangsbereichs ist gewährleistet, dass der mittige flache Bereich einen Grossteil der Deckelfläche (mindestens 40%) ausmacht und daher die Würfel- oder Quaderform als Ganze nicht beeinträchtigt ist.

Die Figuren 2 und 3 zeigen auch im Bereich des umlaufenden Kragens 4 in der Fläche 8 eine Nut 11. Eine solche kann vorhanden sein, wenn der Deckel durch Tiefziehen (bzw. Prägen) hergestellt ist und für das Verschweissen des Deckels 3 mit dem Grundkörper 2 ein Energierichtungsgeber 23 am Deckel vorhanden ist. In anderen Ausführungsformen - bspw. wenn der Energierichtungsgeber nicht am Deckel vorhanden ist oder wenn der Deckel zwar einen Energierichtungsgeber aufweist, aber durch Spritzgiessen hergestellt ist - ist eine solche Nut nicht vorhanden.

Ebenfalls in Figur 3 sichtbar ist eine optionale Verdickung 14 im Übergang zwischen der umlaufenden Seitenwand und dem Kragen. Eine solche Verdickung dient der zusätzlichen Versteifung.

**Figur 4** zeigt sehr schematisch eine Anordnung während des Verschliessens der Kapsel. Ein erstes Werkzeug 21 - bspw. ein , "amboß" - stützt die Kapsel entlang Kapsel. Ein erstes Werkzeug 21 - bspw. ein "Amboss" - stützt die Kapsel entlang des umlaufenden Kragens von unterhalb, während ein zweites Werkzeug 22 von oben her angreift. Energie für das Verschweissen von Grundkörper 2 und Deckel 3 kann bspw. vom zweiten Werkzeug 22 her eingekoppelt werden; diese Energie kann in Form von Ultraschall oder als Wärmeenergie vorhanden sein. Zu Beginn des Befestigungsvorgangs kann der umlaufende Kragen sich weiter nach aussen erstrecken, wobei seine aussenliegenden Partien dann bspw. während des Befestigungsvorgangs im Ultraschalltrennschweissverfahren abgetrennt werden kann (die Werkzeuge 21, 22 sind dann im Unterschied zur sehr schematischen Darstellung entsprechend ausgeformt), oder solche seitlich weiter überstehenden Partien können in einem separaten anschliessenden Arbeitsschritt abgetrennt werden. Die Einzelheiten des Befestigungsvorgangs und des Abtrennens der überstehenden Kragenpartie sind nicht Gegenstand der vorliegenden Erfindung und werden hier nicht eingehender erörtert.

In Figur 4 sieht man, dass durch den vorstehend diskutierten Versatz v das Energie einkoppelnde zweite Werkzeug 22 weiter radial-innen ansetzen kann. Ein radial innenliegender Bereich 25 setzt somit dort an, wo kein Gegenpart in Form des ersten Werkzeugs vorhanden ist und daher dem Werkzeugdruck nicht unmittelbar ein Gegendruck entgegengebracht wird.

Es hat sich gezeigt, dass das von Vorteil für die Festigkeit der Verbindung ist, und zwar obwohl im inneren Bereich das erste Werkzeug 21 nicht unmittelbar eine Gegenkraft ausüben kann, weil es weiter aussen ansetzt als das Energie einkoppelnde zweite Werkzeug 22. Der Vorteil ergibt sich wie vorstehend erläutert aus der Eigensteifigkeit des Grundkörpers und des Deckels aufgrund von deren Form, wobei die Eigensteifigkeit hier noch durch die Verdickung 14 unterstützt wird.

Im Falle von Ultraschweissverfahren mit Energierichtungsgeber - in Figuren 3 und 4 ist die Position eines solchen Energierichtungsgebers 23 illustriert - besteht dieser Vorteil auch dann, wenn der Energierichtungsgeber 23 wie in der Figur gezeigt in dem Bereich ist, in welchem das erste Werkzeug 21 eine Gegenkraft ausüben kann.

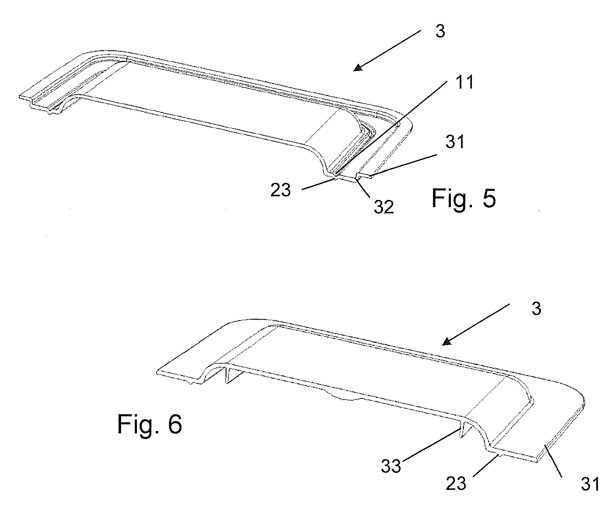

In **Figur 5** sieht man den Deckel 3 vor der Befestigung am Grundkörper. Deutlich sichtbar ist der Energierichtungsgeber 23, der im Gegensatz zu Kapseln aus dem Stand der Technik am Deckel und nicht am Grundkörper ausgebildet ist. Weiter sieht man einen seitlichen Überstand 31, der bei oder nach der Befestigung am Grundkörper - allenfalls zusammen mit einem Überstand des Kragens am Grundkörper - abgetrennt wird. Am Überstand ist noch eine Schulter 32 ausgebildet, welche als Hilfe bei der Positionierung relativ zum Grundkörper dient.

Der Deckel 3 gemäss **Figur 6** unterscheidet sich von demjenigen gemäss Figur 5 dadurch, dass er nicht durch Tiefziehen bzw. Prägen sondern durch Spritzgiessen hergestellt ist. Daher bildet sich aussenseitig des Energierichtungsgebers 23 nicht notwendigerweise eine Nut 11 aus. Als Positionierungshilfen ist anstelle der Schulter ein innenseitig nach innen ragender Steg 33 vorhanden.

## Patentansprüche

1. Mit einem Extraktionsgut gefüllte Portionenkapsel (1) für die Herstellung eines Brüherzeugnisses, aufweisend
- Einen Grundkörper (2) mit einem Bodenbereich (5) und einer umlaufenden Seitenwand (6); und
- einen am Grundkörper (2) befestigten Deckel (3);
- wobei der Grundkörper und der Deckel das Extraktionsgut umschliessen und der Deckel (3) am Grundkörper (2) entlang eines umlaufenden Kragens (4) befestigt ist, welcher zu einer Deckelseite hin an die umlaufende Seitenwand (6) anschliesst;
- wobei der Grundkörper im Bereich des Kragens (4) einen im Wesentlichen rechteckigen Querschnitt hat;
- wobei der Deckel (6) eine Wölbung nach aussen bildet, so dass der Deckel zu einem Kapselvolumen beiträgt;
- wobei sich eine umlaufende, zur Deckelseite hin gewandte Fläche (8) bildet, die sich von einer Aussenkante (7) des Kragens (4) bis zu einem Ansatz (12) der Wölbung erstreckt;
**dadurch gekennzeichnet, dass** der Ansatz (12) der Wölbung im Vergleich zu einem Übergang zwischen der Seitenwand (6) und dem Kragen (4) nach innen versetzt ist.

2. Kapsel nach Anspruch 1, wobei der der Ansatz (12) der Wölbung im Vergleich zum Übergang zwischen Seitenwand (6)und Kragen (4) um mindestens 0.2 mm nach innen versetzt ist.

3. Kapsel nach Anspruch 1 oder 2, wobei der Grundkörper (2) und der Deckel (3) aus Kunststoff gefertigt sind.

4. Kapsel nach Anspruch 3, wobei der Grundkörper (2) und der Deckel (3) durch Tiefziehen hergestellt sind.

5. Kapsel nach Anspruch 3, wobei der Grundkörper (2) und der Deckel (3) durch Spritzgiessen hergestellt sind.

6. Kapsel nach einem der vorangehenden Ansprüche, wobei der Grundkörper (2) und der Deckel (3) im Wesentlichen dieselbe Materialzusammensetzung aufweisen.

7. Kapsel nach einem der vorangehenden Ansprüche, wobei der Grundkörper (2) und der Deckel (3) im Wesentlichen dieselbe Wandstärke aufweisen.

8. Kapsel nach einem der vorangehenden Ansprüche, die bis auf den Kragen im Wesentlichen würfelförmig ist.

9. Kapsel nach einem der vorangehenden Ansprüche, wobei der Deckel von aussen nach innen einen Kragenbereich, der die zur Deckelseite hin gewandte Fläche (8) bildet, einen gekrümmten Übergangsbereich (13) und einen von einer Ebene der Fläche (8) abgesetzten flachen Bereich (9) aufweist.

10. Kapsel nach Anspruch 9, wobei der flache Bereich (9) mindestens 40% einer Deckelfläche einnimmt.

11. Kapsel nach einem der vorangehenden Ansprüche, wobei der Deckel einen Energierichtungsgeber aufweist und mittels Ultraschallschweissen am Grundkörper befestigt ist.

12. Verfahren zum Herstellen einer Kapsel nach einem der vorangehenden Ansprüche, aufweisend die Schritte
- zur-Verfügung-stellen des Grundkörpers (2);
- füllen des Grundkörpers mit dem Extraktionsgut;
- auflegen des Deckels (3) auf den Grundkörper (2), so dass Grundkörper und Deckel gemeinsam den umlaufenden Kragen bilden;
- Befestigen des Deckels am Grundkörper entlang des umlaufenden Kragens unter Energieeintrag.

13. Verfahren nach Anspruch 12, wobei der Energieeintrag durch Ultraschall erfolgt.

14. Verfahren nach Anspruch 13, wobei der Deckel (3) mit einem umlaufenden Energierichtungsgeber (23) versehen ist.

15. Verfahren nach Anspruch 12, wobei der Energieeintrag mittels Laser oder mittels Wärmeübertragung von einem geheizten Werkzeug erfolgt.

## Claims

1. A portion capsule (1) which is filled with an extraction material, for creating a brewed product, comprising:
- a main body (2) with a bottom region (5) and with a peripheral side wall (6); and
- a cover (3) which is fastened on the main body (2);
- wherein the main body and the cover enclose the extraction material, and the cover (3) is fastened on the main body (2) along a peripheral collar (4), said collar towards a cover side connecting to the peripheral side wall (6);
- wherein the main body in the region of the collar (4) has an essentially rectangular cross section;
- wherein the cover (6) forms an outward arching, so that the cover contributes to a capsule volume;
- wherein a peripheral surface (8) facing the cover side is formed, said surface extending from an outer edge (7) of the collar (4) up to a base (12) of the arching;
- **characterised in that** the base (12) of the arching is offset inwards in comparison to a transition between the side wall (6) and the collar (4).

2. A capsule according to claim 1, wherein the base (12) of the arching is offset inwards by at least 0.2 mm in comparison to the transition between the side wall (6) and the collar (4).

3. A capsule according to claim 1 or 2, wherein the main body (2) and the cover (3) are manufactured of plastic.

4. A capsule according to claim 3, wherein the main body (2) and the cover (3) are manufactured by deep-drawing.

5. A capsule according to claim 3, wherein the main body (2) and the cover (3) are manufactured by way of injection moulding.

6. A capsule according to one of the preceding claims, wherein the main body (2) and the cover (3) essentially have the same material composition.

7. A capsule according to one of the preceding claims, wherein the main body (2) and the cover (3) have essentially the same wall thickness.

8. A capsule according to one of the preceding claims, which is essentially cube-like with the exception of the collar.

9. A capsule according to one of the preceding claims, wherein the cover, from the outside to the inside, comprises a collar region forming the surface (8) facing the cover side, an arcuate transition region (13) and a flat region (9) set away from a plane of the surface (8).

10. A capsule according to claim 9, wherein the flat region (9) assumes at least 40% of a cover surface.

11. A capsule according to one of the preceding claims, wherein the cover comprises an energy director and is fastened on the main body by way of ultrasound welding.

12. A method for manufacturing a capsule according to one of the preceding claims, comprising the steps
- providing a main body (2);
- filling the main body with the extraction material;
- placing the cover (3) upon the main body (2), so that the main body and the cover together form the peripheral collar;
- fastening the cover on the main body along the peripheral collar by the introduction of energy.

13. A method according to claim 12, wherein the energy introduction is effected by ultrasound.

14. A method according to claim 13, wherein the cover (3) is provided with a peripheral energy director (23).

15. A method according to claim 12, wherein the energy introduction is effected by way of laser or by way of a heat transfer from a heated tool.

## Revendications

1. Capsule de portion (1) remplie d'un produit d'extraction destinée à la préparation d'un produit à infuser, présentant
- un corps de base (2) avec une partie de fond (5) et une paroi latérale périphérique (6)
- un couvercle (3) fixé au corps de base (2),
- le corps de base et le couvercle enferment le produit d'extraction et le couvercle (3) est fixé au corps de base (2) le long d'un collet périphérique (4), qui se raccorde à la paroi latérale périphérique (6) en direction d'un côté de couvercle,
- le corps de base présente dans la région du collet (4) une section transversale essentiellement rectangulaire,
- le couvercle (6) forme un bombement vers l'extérieur, de telle manière que le couvercle contribue à un volume de capsule,
- une face périphérique (8) tournée vers le côté de couvercle, qui s'étend depuis un bord extérieur (7) du collet (4) jusqu'à un épaulement (12) du bombement;
**caractérisée en ce que** l'épaulement (12) du bombement est décalé vers l'intérieur par rapport à une transition entre la paroi latérale (6) et le collet (4).

2. Capsule selon la revendication 1, dans laquelle l'épaulement (12) du bombement est décalé d'au moins 0,2 mm vers l'intérieur par rapport à la transition entre la paroi latérale (6) et le collet (4).

3. Capsule selon la revendication 1 ou 2, dans laquelle le corps de base (2) et le couvercle (3) sont fabriqués en matière plastique.

4. Capsule selon la revendication 3, dans laquelle le corps de base (2) et le couvercle (3) sont fabriqués par emboutissage.

5. Capsule selon la revendication 3, dans laquelle le corps de base (2) et le couvercle (3) sont fabriqués par moulage par injection.

6. Capsule selon l'une quelconque des revendications précédentes, dans laquelle le corps de base (2) et le couvercle (3) présentent essentiellement la même composition de matière.

7. Capsule selon l'une quelconque des revendications précédentes, dans laquelle le corps de base (2) et le couvercle (3) présentent essentiellement la même épaisseur de paroi.

8. Capsule selon l'une quelconque des revendications précédentes, qui est essentiellement de forme cubique à l'exception du collet.

9. Capsule selon l'une quelconque des revendications précédentes, dans laquelle le couvercle présente de l'extérieur vers l'intérieur une région de collet, qui forme la face (8) tournée vers le côté de couvercle, une région de transition courbe (13) et une région plate (9) décalée par rapport au plan de la face (8).

10. Capsule selon la revendication 9, dans laquelle la région plate (9) occupe au moins 40 % d'une face du couvercle.

11. Capsule selon l'une quelconque des revendications précédentes, dans laquelle le couvercle présente un orienteur d'énergie et est fixé au corps de base par soudage aux ultrasons.

12. Procédé de fabrication d'une capsule selon l'une quelconque des revendications précédentes, présentant les étapes suivantes:
- mise à disposition du corps de base (2);
- remplissage du corps de base avec le produit d'extraction;
- pose du couvercle (3) sur le corps de base (2), de telle manière que le corps de base et le couvercle forment ensemble le collet périphérique;
- fixation du couvercle sur le corps de base le long du collet périphérique par apport d'énergie.

13. Procédé selon la revendication 12, dans lequel l'apport d'énergie est effectué par ultrasons.

14. Procédé selon la revendication 13, dans lequel le couvercle (3) présente un orienteur d'énergie périphérique (23).

15. Procédé selon la revendication 12, dans lequel l'apport d'énergie est effectué au moyen d'un laser ou au moyen d'une transmission de chaleur à partir d'un outil chauffé.
